# FASCICULE DE BREVET EUROPEEN

(11) **EP 4 232 420 B1**
(45) Date de publication et mention de la délivrance du brevet: **16.04.2025**
(21) Numéro de dépôt: 21810076.6
(22) Date de dépôt: 19.10.2021
(51) Int. Cl.: C04B 35/117, C04B 35/14, C04B 35/18, C04B 35/624, C04B 35/628, C04B 35/634, C04B 35/80, D02J 3/00, D06M 11/00, D06B 3/10, D06C 9/00

(54) **MECHES PRE-IMPREGNEES POUR MATERIAU COMPOSITE**
VORIMPRÄGNIERTE ROVINGS FÜR VERBUNDSTOFFMATERIAL
PRE-IMPREGNATED ROVINGS FOR COMPOSITE MATERIAL

(30) Priorité: 21.10.2020 FR 2010787
(43) Date de publication de la demande: 30.08.2023
(73) Titulaire: Safran Ceramics, 33185 Le Haillan (FR); IRT Antoine de Saint Exupery, 31400 Toulouse (FR); Centre national de la recherche scientifique, 75016 Paris (FR); Université Paul Sabatier Toulouse III, 31400 Toulouse (FR)
(72) Inventeur: GRUMBACH, Fanny, 13090 AIX-EN-PROVENCE (FR); MECUSON, Gautier, 77550 MOISSY-CRAMAYEL (FR); PAILLASSA, Aude, 33000 BORDEAUX (FR); ANSART, Florence, 31670 LABEGE (FR); DULUARD, Sandrine, 31500 TOULOUSE (FR); LAVAL, Nicolas, 77550 MOISSY-CRAMAYEL (FR)
(74) Mandataire: Cabinet Beau de Loménie
(86) Numéro de dépôt international: PCT/FR2021/051822
(87) Numéro de publication internationale: WO 2022/084621

(56) Documents cités:
- WO-A1-2019/081846
- WO-A1-2019/105966
- WO-A1-2019/142168
- WO-A2-03/010781
- DE-A1- 102015 219 442

## Description

### Domaine Technique

L'invention s'inscrit dans le domaine de la fabrication de matériaux composites à matrice céramique, en particulier des matériaux composites oxydes/oxydes, et plus précisément, la préparation de préformes fibreuses pré-imprégnées pour la fabrication de ces matériaux.

### Technique antérieure

Les pièces en matériaux composites à matrice céramique présentent un intérêt industriel dans certains domaines techniques, notamment grâce à leurs propriétés mécaniques élevées, et leur capacité à conserver ces propriétés en température.

La fabrication de pièces en matériaux composites peut être réalisée par la succession d'une étape de préparation d'une préforme fibreuse aux dimensions proches de la pièce souhaitée, puis une étape d'imprégnation de la préforme par une matrice céramique afin d'obtenir la pièce finale.

Dans les cas où la géométrie de la pièce souhaitée est complexe, la préparation de la préforme fibreuse peut être grandement simplifiée en utilisant pour sa préparation une méthode de placement automatique des fibres, les fibres étant ensuite imprégnées par une matrice, par exemple, via un procédé de moulage par transfert de résine. Par exemple, les documents WO03/010781, WO2019/142168 WO2019/105966 décrivent des fibres éventuellement utilisables dans un tel procédé. Pour faciliter l'étape d'imprégnation de la préforme par une matrice, il est également connu de l'art antérieur d'utiliser des mèches pré-imprégnées. Avec de telles mèches, une fois la préforme préparée, l'étape d'imprégnation peut être omise, car la résine est déjà contenue dans les mèches formant la préforme, et un chauffage des mèches permet alors de former la matrice et d'obtenir la pièce finale en matériau composite.

Par ailleurs, l'utilisation de de précurseurs organosiliciés de type polysiloxanes, polysilanes et polycarbosilanes, pour imprégner des fibres oxydes est connue de DE 10 2015 219442.

Malheureusement, les mèches pré-imprégnées disponibles ne sont pas compatibles avec les méthodes de placement automatique de fibres.

### Exposé de l'invention

L'invention vise précisément à permettre de conserver les avantages des deux méthodes précitées.

Pour cela, elle concerne un procédé selon la revendication 1, à savoir un procédé d'imprégnation d'une mèche en fibres oxydes par une matrice d'alumine et de silice comprenant une étape d'introduction d'une mèche de fibres oxydes dans un bain d'imprégnation, caractérisé en ce que le bain d'imprégnation est élaboré par voie sol-gel et comprend un précurseur de silice sous forme d'un sol polymérique hybride, un précurseur d'alumine sous forme d'un sol colloïdal et des particules céramiques. L'avantage du procédé d'imprégnation par voie sol-gel réside dans le fait que cette formulation du bain d'imprégnation permet l'intégration de liants inorganiques actifs, notamment le sol polymérique hybride et le sol colloïdal, qui contribuent à une meilleure consolidation de la matrice via la création de liaisons covalentes entre les particules céramiques lors du traitement thermique de la pièce finale, contribuant à renforcer la cohésion de la matrice.

Ce procédé d'imprégnation permet de disposer d'une mèche pré-imprégnée qui soit compatible avec un procédé de placement automatique des fibres.

Au sens de l'invention, le terme de « mèche » doit s'entendre comme un ensemble de fibres ou filaments sensiblement parallèles entre eux et réunis sans tissage. Par exemple, une mèche peut comprendre plus d'une dizaine de milliers de fibres.

En particulier, l'utilisation d'un bain d'imprégnation sous la forme sol-gel dans lequel est trempée une mèche d'oxyde permet d'imprégner les mèches avec une matrice de composition optimisée afin que la mèche présente les caractéristiques souhaitées, notamment en termes de flexibilité et de pégosité.

Il a notamment été observé que l'utilisation d'un bain d'imprégnation sol-gel permet d'obtenir une bonne flexibilité des mèches, apportée notamment par la partie organique du bain sol-gel, de sorte que leur utilisation soit possible avec un robot de procédé de placement automatique de fibres. En plus de cette flexibilité, il est également observé que les mèches ainsi obtenues possèdent néanmoins une raideur suffisante pour permettre un placement correct, sans occasionner de plis.

Enfin, la pégosité des mèches est réactivable à la dépose par chauffage ou mouillage. Cela permet un stockage aisé des mèches, notamment sous forme de bobine, car leur pégosité n'est pas trop importante, mais peut être réactivée simplement pour permettre une disposition facilitée lors d'un dépôt par placement automatique de fibres.

Il résulte du choix de ce bain d'imprégnation particulier de nombreux avantages.

A la différence des mèches de l'art antérieur, le choix particulier du bain d'imprégnation et de ses composants permet de charger des mèches à cœur. Il est entendu par l'expression d'un chargement « à cœur » que les charges minérales et le sol polymérique hybride compris dans le bain d'imprégnation s'imprègnent uniformément dans l'ensemble du volume de la mèche.

Le chargement à cœur des mèches permet d'augmenter la charge contenue dans les mèches, comparativement à des mèches de l'art antérieur. Ainsi, les mèches permettent d'obtenir des matériaux finaux via des techniques de placement automatique de fibres inaccessibles avec les mèches pré-imprégnées de l'art antérieur.

Le chargement à cœur est rendu possible par le comportement rhéologique du bain d'imprégnation, lui-même dépendant de sa composition. C'est notamment le choix particulier d'un sol polymérique hybride qui permet que le bain ait un comportement adéquat pour l'imprégnation à cœur des mèches.

De plus, le chargement à cœur des mèches permet d'assurer le calibrage de la forme des mèches et de maintenir ce calibrage dans le temps, notamment lors du dépôt par placement automatique des fibres, ce qui permet avec ces mèches la réalisation de préformes plus homogènes qu'avec des mèches de l'art antérieur qui ne sont chargées que partiellement. Cette maitrise du calibrage des mèches permet d'obtenir une étape de dépôt plus précise. En effet, les mèches chargées à cœur se déforment moins lors du dépôt par placement automatique comparativement à des mèches chargées partiellement. Les préformes pré-imprégnées obtenues sont donc moins sujettes à des variations inattendues de leurs dimensions. Il s'ensuit des préformes fibreuses obtenues d'une manière plus reproductible et plus proches des dimensions finales recherchées.

Par « sol polymérique hybride », il est entendu que le sol polymérique comprend des parties organiques et des parties inorganiques.

Les composants particuliers choisis pour le bain d'imprégnation assurent en association que les mèches imprégnées remplissent l'ensemble des propriétés attendues.

D'une part, la charge céramique assure la plus grande partie de l'apport en matrice que les mèches pré-imprégnées doivent comporter pour permettre l'obtention d'un matériau composite. Sans cette charge céramique, la quantité de matrice contenue dans les mèches ne serait pas suffisante.

D'autre part, le choix d'un sol polymérique hybride comme précurseur de silice, en plus des particules céramiques permet aux mèches pré-imprégnées de contenir encore plus de matrice, apporté par la partie inorganique du sol. En outre, cette partie de la matrice est localisée jusqu'au cœur des mèches alors qu'il est observé qu'en l'absence de ce sol polymérique, les mèches ne se chargent que superficiellement.

La partie organique du sol est quant à elle éliminée lors de la cuisson de la matrice. Et elle permet donc d'apporter une porosité souhaitée, et uniformément répartie dans l'ensemble de la pièce finale.

La définition précise du bain d'imprégnation permet d'obtenir un matériau composite final ayant une composition choisie précisément, notamment en termes de porosité de taux de fibres, et de quantité de matrice.

Dans un mode de réalisation, le procédé est un procédé d'imprégnation d'une mèche en fibres oxydes par une matrice d'alumine et de silice comprenant une étape d'introduction d'une mèche de fibres oxydes dans un bain d'imprégnation, caractérisé en ce que le bain d'imprégnation est élaboré par voie sol-gel et comprend un précurseur de silice sous forme d'un sol polymérique hybride, un précurseur d'alumine sous forme d'un sol colloïdal et des particules céramiques et en ce que les mèches sont chargées à cœur.

Au sens de l'invention, il est entendu que la « matrice d'alumine et de silice » est en réalité la composition imprégnant les mèches pré-imprégnées obtenue par le procédé de l'invention, et n'est donc pas identique à la matrice d'une pièce en matériau composite.

Dans un mode de réalisation, les mèches en fibres oxydes sont des mèches en fibres d'oxyde d'aluminium.

Selon l'invention, le précurseur de silice est choisi parmi les composés suivants :
3(glycidyloxypropyl)triethoxysilane (GPTES), le 3(glycidyloxypropyl)trimethoxysilane (GPTMS), le 3(glycidyloxypropyl)diethoxysilane (GPDES) ou encore l'ureidopropyltrimethoxysilane (UPS).

Dans un mode de réalisation, le précurseur d'alumine peut être de la boehmite colloïdale ou de l'isopropoxyde d'aluminium (AIP).

Dans un mode de réalisation, le rapport massique entre le précurseur de silice et le précurseur d'alumine dans le bain d'imprégnation peut être compris entre 90/10 et 50/50.

Le choix de ces polymères confère aux mèches les caractéristiques de flexibilité et de pégosité voulues, notamment compatibles avec les procédés de placement automatique.

Par exemple, la boehmite colloïde peut être composée de particules dont la distribution en taille est centrée autour d'une valeur entre 0,1 et 0,5 µm.

Dans un mode de réalisation, le bain d'imprégnation peut comprendre, en plus du précurseur de silice et du précurseur d'alumine un ou plusieurs polymères organiques.

Dans ce mode de réalisation, la teneur totale en polymère organique peut être comprise entre 10 % et 35 % de la masse totale des éléments introduits dans le bain d'imprégnation.

De tels polymères organiques peuvent être choisis parmi les thermoplastiques hydrosolubles ou les résines tackifiantes tels que la polyvinylpyrrolidone, le polyéthylène glycol, l'alcool polyvinylique ou le poly(2-ethyl-2-oxazoline).

Ces polymères peuvent permettre d'optimiser la pégosité des mèches après imprégnation. De plus, ils permettent également d'augmenter la flexibilité des mèches imprégnées, et ainsi de faciliter leur enroulement pour le stockage. Enfin, leur dégradation lors de la préparation d'une pièce en matériau composite permet de créer des porosités, et le choix d'incorporer ces derniers dans les mèches permet donc dans une certaine mesure de dimensionner les propriétés finales d'une pièce en matériau composite obtenue à partir de ces mèches.

Selon l'invention, les particules céramiques comprises dans le bain d'intégration sont de la poudre d'alumine. Une telle poudre permet d'augmenter la charge de la matrice en alumine dans les mèches lors de l'étape d'imprégnation.

Dans un tel mode de réalisation, le bain d'imprégnation peut en outre comprendre un dispersant, afin d'éviter la sédimentation de particules céramiques, et ainsi d'assurer que les propriétés du bain d'imprégnation soient conservées pendant toute la durée de l'imprégnation.

Le dispersant peut être un polymère, par exemple choisi parmi les polyméthacrylates.

La fabrication d'une pièce en matériau composite à matrice d'alumine et de silice comprenant une étape de placement automatique de fibres oxydes pré-imprégnées telles que décrites ci-dessus et une étape de frittage des fibres oxydes pré-imprégnées est décrite ci-après, mais n'est pas revendiquée.

Un tel procédé permet d'obtenir des pièces aux géométries complexes sans avoir à développer de nouveaux outils de placement automatique des fibres, les mèches décrites ci-dessus étant adaptées aux procédés de placement automatique déjà existants.

Dans un mode de réalisation, le procédé de fabrication du matériau composite ne nécessite pas d'autres étapes que l'étape de fabrication de la préforme par placement automatique de fibres et l'étape de frittage. Il en résulte un procédé de fabrication d'un matériau composite grandement simplifié.

En effet, le chargement obtenu pour les mèches pré-imprégnées assure une quantité suffisante de matrice dans les mèches pré-imprégnées répartie de manière homogène dans la préforme, de sorte qu'il ne soit pas nécessaire d'appliquer une étape supplémentaire de préparation de la préforme, souvent observée avec des mèches pré-imprégnées de l'art antérieur pour obtenir une meilleure répartition de la matrice dans la préforme.

Il est du mérite des inventeurs d'être parvenu à définir une composition d'un bain d'imprégnation qui permette d'une part un chargement en matrice suffisant des mèches pré-imprégnées, obtenu grâce au chargement à cœur, et qui permet d'autre part que les mèches présentent des propriétés compatibles d'un placement automatique de fibres.

Une bobine comprenant au moins une mèche de fibres oxydes pré-imprégnée obtenue à l'aide du procédé d'imprégnation décrit ci-dessus est décrite ci-dessous, mais n'est pas revendiquée.

Une telle bobine permet le stockage aisé de mèches telles que décrites ci-dessus, et permet également le transport des mèches.

En effet, le choix particulier des composants du bain d'imprégnation et notamment du sol polymérique hybride assure que les mèches soient suffisamment souples pour pouvoir être stockées sous la forme de bobine, mais également suffisamment rigides pour rester compatibles d'un procédé de placement automatique de fibres même après stockage.

### Brève description des dessins

[Fig. 1] La figure 1 est une représentation schématique d'un procédé d'imprégnation d'une mèche selon un mode de réalisation de l'invention.
[Fig. 2] La figure 2 est une représentation schématique d'un procédé de préparation d'une préforme fibreuse grâce au procédé de l'invention.

### Description des modes de réalisation

L'invention est à présent décrite au moyen de modes de réalisation particuliers qui ne doivent pas être interprétés de manière limitative.

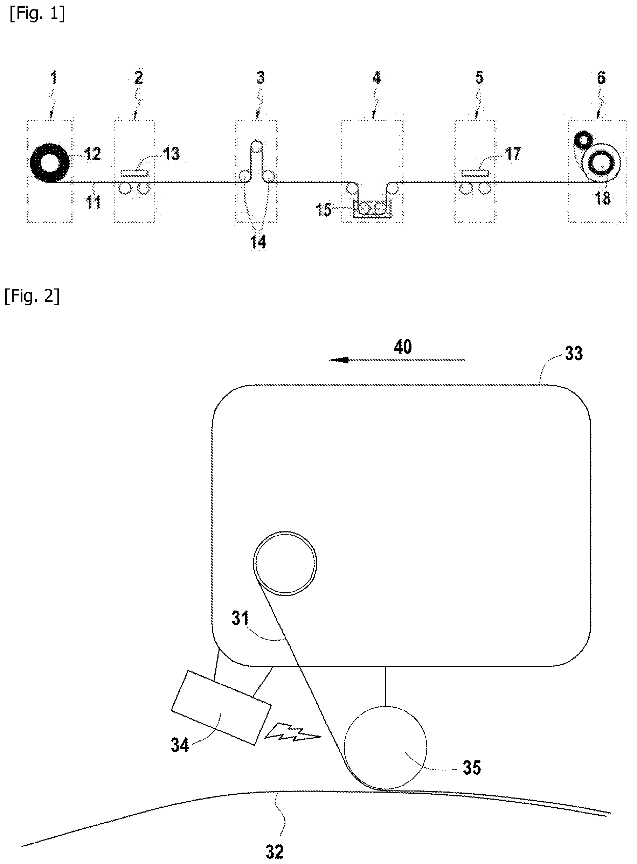

La figure 1 représente un procédé de préparation d'une bobine de mèches de fibres oxyde pré-imprégnée.

Comme décrit ci-dessus, ce sont les composants du bain d'imprégnation 15 qui vont permettre aux mèches pré-imprégnées 11 d'être ensuite utilisables dans un procédé de préparation d'une préforme fibreuse avec un procédé de placement automatique des fibres.

Dans le procédé décrit en figure 1, l'étape d'imprégnation 4 peut être précédée d'une ou plusieurs étapes permettant d'améliorer l'imprégnation de la mèche 11 par la matrice du bain d'imprégnation 15.

De telles étapes, facultatives et indépendantes, sont illustrées de manière schématique en figure 1. Il ne faut pas comprendre de la figure 1 que toutes ces étapes doivent être présentes simultanément, et elles peuvent chacune être présentes ou non selon les besoins de l'imprégnation.

Par exemple, le procédé peut comprendre une étape de débobinage 1 puis de désensimage 2 avant l'imprégnation 4. Au cours de ces étapes, une mèche de fibres oxyde 11 préalablement ensimée et sous la forme d'une bobine 12, est déroulée, puis désensimée grâce à un traitement thermique, par exemple compris entre 450 et 700 °C, appliqué au moyen d'un organe de chauffage 13.

L'imprégnation peut également être précédée d'une étape d'étalement 3 des fibres, au cours de laquelle un peigne 14 étale les mèches de fibres oxyde 11.

Une telle étape d'étalement 3 permet d'augmenter la surface de contact entre le bain d'imprégnation 15 et les fibres des mèches et permet ainsi une meilleure imprégnation des mèches 11 lors du contact avec le bain d'imprégnation 15.

Le procédé peut ensuite comprendre l'étape d'imprégnation par trempage 4 dans le bain d'imprégnation 15, ayant les caractéristiques décrites ci-dessus.

Le procédé peut encore comprendre une étape de séchage 5, réalisée au moyen d'un second organe de chauffage 17 puis une étape de bobinage 6, permettant d'enrouler la mèche de fibre oxyde 11 à présent imprégnée autour d'une bobine 18.

Comme décrit précédemment, ce sont les composants du bain d'imprégnation 15 qui permettent d'assurer que les mèches pré-imprégnées obtenues soient compatibles avec les conditions de dépôts d'un procédé de placement automatique des fibres.

La figure 2 illustre de manière schématique un procédé de placement automatique des fibres pré-imprégnées obtenues selon l'un des modes de réalisation décrit ci-dessus, permettant la fabrication d'une pièce en matériau composite à matrice céramique.

Dans un tel procédé de fabrication, les mèches pré-imprégnées 31 sont déposées à la surface d'un moule 32. L'outil 33 de dépôt est équipé d'une tête chauffante 34 permettant l'activation de la pégosité des mèches, et l'adhésion de la mèche 31 au moule 32, ou le cas échéant aux mèches déjà placées. La flèche 40 représente la direction de déplacement de l'outil 33.

L'outillage est de plus muni d'une roue de compactage 35 qui permet d'appliquer une pression sur les mèches 31 déposées et ainsi de permettre la fabrication de la préforme.

La préforme ainsi obtenue par le dépôt successif des mèches 31 est ensuite frittée au cours d'une étape non représentée pour parvenir à une pièce en matériau composite à matrice céramique.

Ce procédé cumule l'avantage d'une préforme pré-imprégnée et l'avantage d'un procédé de dépôt des fibres par un procédé de placement automatique des fibres. En effet, ce procédé ne nécessite pas d'étape d'injection de la matrice, celle-ci étant déjà contenue dans les mèches déposées. Il ne nécessite pas non plus de placer les fibres à la main, celles-ci étant compatibles avec le placement automatique.

### Exemple

L'invention est à présent illustrée au moyen d'un exemple de réalisation qui ne doit pas être interprété limitativement.

Un bain d'imprégnation est préparé en introduisant de la boehmite colloïdale dans une solution contenant de l'eau et de la polyvinylpyrrolidone de masse moléculaire 3500 g/mol, pour atteindre une concentration entre 275 g/L et 1100 g/L.. La boehmite colloïdale est introduite dans une concentration de 80 g/L, et possède une granulométrie de l'ordre de 0,2 µm. La solution est ensuite peptisée par introduction d'acide acétique, dans une concentration de 0,5 mol/L.

La solution ainsi préparée est alors agitée jusqu'à disparition complète des agrégats de boehmite. Un dispersant est alors ajouté, par exemple un polyméthacrylate d'ammonium

De la poudre d'alumine est ensuite ajoutée, et la solution est agitée pendant quelques heures.

Après cette agitation, un précurseur hybride de silice, le 3(glycidyloxypropyl)triéthoxysilane est introduit au goutte à goutte dans la solution, puis l'ensemble est agité pendant 12 heures. Le rapport massique entre le précurseur de silice et le précurseur d'alumine est de 75/25.

Le bain d'imprégnation est alors prêt, et il est possible d'imprégner des mèches d'oxyde par exemple au moyen d'un procédé illustré schématiquement en figure 1, décrite précédemment.

De telles mèches peuvent alors être utilisées au cours d'un procédé de fabrication avec placement automatique des fibres, par exemple celui illustré en figure 2, décrite précédemment.

## Revendications

1. Procédé d'imprégnation d'une mèche en fibres oxydes (11) par une matrice d'alumine et de silice comprenant une étape (4) d'introduction d'une mèche de fibres oxydes dans un bain d'imprégnation (15), **caractérisé en ce que** le bain d'imprégnation est élaboré par voie sol-gel et comprend un précurseur de silice sous forme d'un sol polymérique hybride, un précurseur d'alumine sous forme d'un sol colloïdal et des particules céramiques, dans lequel le précurseur de silice est choisi parmi le 3(glycidyloxypropyl)triethoxysilane (GPTES), le
3(glycidyloxypropyl)trimethoxysilane (GPTMS), le 3(glycidyloxypropyl)diethoxysilane (GPDES) ou encore l'ureidopropyltrimethoxysilane (UPS), et dans lequel les particules céramiques sont de la poudre d'alumine.

2. Procédé d'imprégnation selon la revendication 1, dans lequel les mèches (11) sont en fibres d'oxyde d'aluminium.

3. Procédé d'imprégnation selon l'une quelconque des revendications 1 à 2, dans lequel le précurseur d'alumine est de la boehmite colloïdale ou de l'isopropoxyde d'aluminium (AIP).

4. Procédé d'imprégnation selon l'une quelconque des revendications 1 à 3, dans lequel le bain d'imprégnation (15) comprend en outre un polymère organique choisi parmi les thermoplastiques hydrosolubles ou les résines tackifiantes.

## Patentansprüche

1. Verfahren zum Imprägnieren eines Rovings aus Oxidfasern (11) durch eine Aluminiumoxid- und Siliziummatrix, umfassend einen Schritt (4) des Einführens eines Rovings aus Oxidfasern in ein Imprägnierbad (15), **dadurch gekennzeichnet, dass** das Imprägnierbad auf Sol-Gel-Weise hergestellt wird und einen Vorläufer aus Silizium in Form eines hybriden Polymersols, einen Aluminiumoxidvorläufer in Form eines kolloidalen Sols und keramische Partikel umfasst, wobei der Siliziumvorläufer ausgewählt ist aus 3(Glycidyloxypropyl)triethoxysilan (GPTES), 3(Glycidyloxypropyl)trimethoxysilan (GPTMS), (Glycidyloxypropyl)diethoxysilan (GPDES) oder auch Ureidopropyltrimethoxysilan (UPS), und wobei die keramischen Partikel Aluminiumoxidpulver sind.

2. Verfahren zum Imprägnieren nach Anspruch 1, wobei die Rovings (11) aus Aluminiumoxidfasern sind.

3. Verfahren zum Imprägnieren nach einem der Ansprüche 1 bis 2, wobei der Aluminiumoxidvorläufer kolloidales Böhmit oder Aluminiumisopropoxyd (AIP) ist.

4. Verfahren zum Imprägnieren nach einem der Ansprüche 1 bis 3, wobei das Imprägnierbad (15) außerdem ein organisches Polymer umfasst, ausgewählt aus wasserlöslichen Thermoplasten oder Klebharzen.

## Claims

1. A method for impregnating an oxide fibre roving (11) with a matrix of alumina and silica comprising a step (4) of introducing an oxide fibre roving into an impregnation bath (15), **characterized in that** the impregnation bath is prepared by sol-gel process and comprises a silica precursor in the form of a hybrid polymeric sol, an alumina precursor in the form of a colloidal sol and ceramic particles, wherein the silica precursor is chosen from (3-glycidyloxypropyl)triethoxysilane (GPTES), (3-glycidyloxypropyl)trimethoxysilane (GPTMS), (3-glycidyloxypropyl)diethoxysilane (GPDES) or ureidopropyltrimethoxysilane (UPS), wherein the ceramic particles are alumina powder.

2. The impregnation method according to claim 1, wherein the rovings (11) are aluminum oxide fibres.

3. The impregnation method according to any one of claims 1 to 2, wherein the alumina precursor is colloidal boehmite or aluminium isopropoxide (AIP).

4. The impregnation method according to any one of claims 1 to 5,
wherein the impregnation bath (15) further comprises an organic polymer selected from water-soluble thermoplastics or tackifying resins.
